# FASCICULE DE BREVET EUROPEEN

(11) **EP 0 564 378 B1**
(45) Date de publication et mention de la délivrance du brevet: **05.03.1997**
(21) Numéro de dépôt: 93420135.1
(22) Date de dépôt: 25.03.1993
(51) Int. Cl.: H02P 5/418

(54) **Procédé de régulation à basse vitesse d'un moteur**
Verfahren zur Regelung eines Motors mit niedriger Geschwindigkeit
Low speed regulation method for a motor

(30) Priorité: 30.03.1992 FR 9204133
(43) Date de publication de la demande: 06.10.1993
(73) Titulaire: CROUZET Electroménager, F-26000 Valence (FR)
(72) Inventeur: Astic, Georges, F-26320 Saint Marcel-Les-Valence (FR); Dejoux, Didier, F-26400 Crest (FR); Suchet, Valérie, F-26500 Bourg Les Valence (FR)
(74) Mandataire: de Beaumont, Michel

(56) Documents cités:
- FR-E- 95 206
- US-A- 4 326 153
- ELEKTRONIK, vol. 35, no. 14, juillet 1986, Munich DE, pages 73-78; H. SAX et al.: 'Mikrocomputer mit Sensor- und Aktuator-Interface'

## Description

La présente invention concerne un procédé de régulation de vitesse d'un moteur, notamment d'un moteur de machine à laver dont la vitesse de rotation peut être régulée à l'intérieur d'une certaine plage.

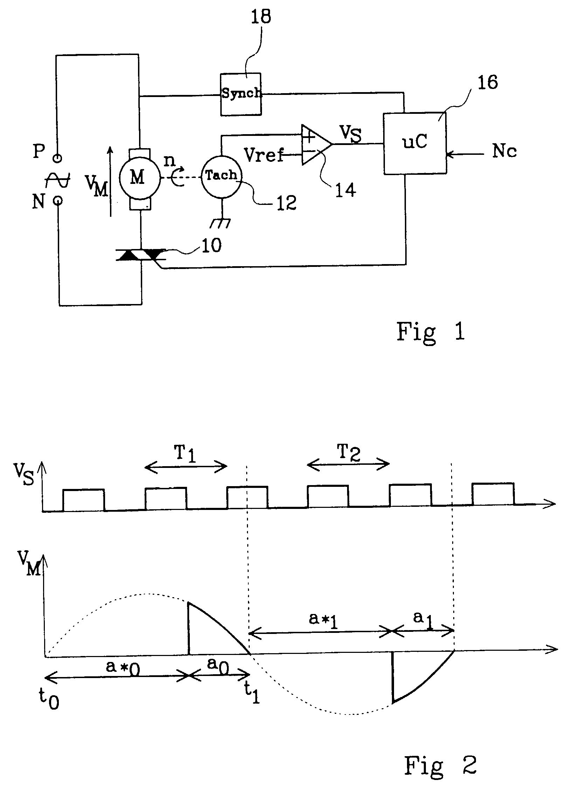

La figure 1 représente schématiquement un système de régulation classique d'un moteur M de type dit universel. Une première borne du moteur M est reliée, par exemple, à une phase P du secteur et la deuxième borne du moteur est reliée au neutre N du secteur par l'intermédiaire d'un triac 10. L'axe du moteur M est couplé à un tachymètre 12. La tension de sortie du tachymètre 12 est fournie à une entrée d'un comparateur 14 dont l'autre entrée est reliée à une tension de référence Vref. Le signal de sortie Vs du comparateur 14 est fourni à un microcontrôleur 16. Ce signal Vs est un signal indicatif de la vitesse de rotation du moteur. Par ailleurs, le microcontrôleur 16 reçoit des impulsions de synchronisation sur le secteur à travers un circuit de mise en forme 18 relié, par exemple, à la phase P du secteur. Le microcontrôleur 16 exploite le signal de vitesse Vs et les impulsions de synchronisation pour corriger l'angle de conduction du triac 10 en fonction d'une consigne de vitesse de rotation Nc.

Le procédé de régulation de la vitesse du moteur M est essentiellement mis en oeuvre par un programme du microcontrôleur 16. Le tachymètre 12 délivre un signal périodique de fréquence et d'amplitude proportionnelles à la vitesse de rotation n du moteur. Les alternances positives dépassant la tension de référence Vref du signal délivré par le tachymètre sont converties en créneaux par le comparateur 14. La tension Vref est choisie à une valeur suffisante pour que des impulsions parasites de faible amplitude ne soient pas converties en créneaux.

Le procédé de régulation est basé sur la mesure de la période du signal Vs. Pour cela, le microcontrôleur 16 convertit la consigne de vitesse Nc en une période de consigne qui est comparée à la période du signal Vs. En fonction de l'erreur de période, le microcontrôleur 16 calcule selon des lois classiques d'asservissement l'angle de conduction aᵢ à donner au triac 10 pour modifier la vitesse de rotation du moteur M. Ci-après on se référera à des angles de conduction aᵢ et à des angles de non-conduction a∗ᵢ = 180° -aᵢ. Les impulsions de synchronisation sur le secteur indiquent au microcontrôleur 16 à quels instants il faut considérer les angles calculés.

La figure 2 représente un exemple d'allure du signal de vitesse Vs et de la tension V_{M} aux bornes du moteur M. On suppose que le moteur M tourne à vitesse constante. Ainsi, comme cela est représenté, le signal Vs est à fréquence constante.

La tension V_{M} aux bornes du moteur a été représentée pour une période de la tension du secteur, les alternances du secteur étant représentées en pointillés.

A un instant t₀, la tension du secteur croît à partir de zéro et il survient une impulsion de synchronisation, non représentée, permettant d'initialiser le décomptage d'un angle de non-conduction a∗₀ calculé lors de la demi-période secteur précédente. Lorsque l'angle a∗₀ a été décompté, le triac 10 est rendu passant et le restant de l'alternance du secteur est appliqué sur le moteur M.

Durant la demi-période du secteur commençant à l'instant t₀, le microcontrôleur 16 mesure les périodes consécutives du signal Vs et calcule pour chacune l'angle de non-conduction a∗₁ pour la demi-période secteur suivante. L'angle de non-conduction a∗₁ est définitivement calculé pour la dernière période complète T₁ du signal Vs comptabilisé avant la fin de la demi-période secteur courante.

A un instant t₁, la tension secteur passe par zéro. Le triac 10 se bloque. Une nouvelle impulsion de synchronisation, non-représentée, survient et le décomptage du nouvel angle de non-conduction a∗₁ est initialisé...

On a représenté la dernière période T₂ du signal Vs comptabilisée avant la fin de la demi-période secteur pour calculer l'angle de non-conduction suivant.

On conçoit, en observant la figure 2, qu'il se pose un problème si la période du signal Vs devient supérieure à la demi-période secteur. A ce moment là, on ne peut pas calculer l'angle de non-conduction pour la demi-période secteur suivante. Ce qui se produit alors est qu'un angle de non-conduction calculé pour une période du signal Vs est utilisé pour deux demi-périodes secteur consécutives.

Il s'avère que la régulation de la vitesse du moteur fonctionne encore convenablement pour des périodes du signal Vs devenant proches de la période secteur, un même angle de non-conduction étant alors utilisé pour quatre demi-périodes secteur consécutives. On appelle vitesse minimale la vitesse qui peut encore être convenablement régulée avec un système de régulation du type de la figure 1. Dans un moteur équipé d'un tachymètre à 8 paires de pôles et alimenté avec un réseau de 50 Hz, la vitesse minimale est de l'ordre de 375 tours par minute (ce qui correspond à une période du signal Vs égale à la période secteur).

Si l'on essaie de réguler le moteur à une vitesse plus lente que la vitesse minimale, un même angle de non-conduction est utilisé pour un nombre trop élevé de demi-périodes secteur, ce qui provoque des accélérations ou décélérations du moteur qui ne peuvent être détectées à temps pour une correction. Par conséquent, la vitesse du moteur oscillerait entre zéro et une valeur supérieure à la vitesse minimale (375 tours par minute ci-dessus).

Or, dans certaines applications, on souhaite obtenir une vitesse de rotation particulièrement lente. Par exemple, dans une machine à laver équipée d'un dispositif de freinage du tambour dans une position prédéterminée, le tambour est arrêté sur une faible course par un frein. Si le tambour tourne trop rapidement, il se produit un choc important lors de son freinage. Outre le bruit désagréable que cela produit, le dispositif de freinage doit être réalisé de façon robuste.

Bien entendu, en choisissant un tachymètre avec un nombre de paires de pôles plus élevé, la vitesse minimale est réduite. Toutefois, de tels tachymètres sont peu disponibles et de nombreux moteurs sont livrés en standard équipés d'un tachymètre à 8 paires de pôles et même parfois à 4 paires de pôles.

Un objet de la présente invention est d'obtenir, dans un système de régulation du type de celui de la figure 1, une vitesse de moteur inférieure à la vitesse minimale que le système peut normalement réguler.

Un autre objet de la présente invention est d'obtenir une telle vitesse basse quel que soit le nombre de paires de pôles du tachymètre utilisé.

Cet objets sont atteints grâce à un procédé de régulation selon la revendication 1.

Selon un mode de réalisation de la présente invention, le procédé comprend, lors d'une régulation de vitesse dans une plage de valeurs supérieures à ladite basse vitesse, les étapes suivantes : comparer la période du signal de vitesse à une période de consigne ; en fonction de l'écart entre la période de consigne et la période du signal de vitesse, modifier l'angle de conduction d'un interrupteur commandant le moteur à partir du secteur.

Selon un mode de réalisation de la présente invention, le courant de commande du moteur est progressivement augmenté en augmentant ledit angle de conduction sur plusieurs demi-périodes du secteur.

Le procédé selon la présente invention, est utilisé dans une machine à laver pour faire tourner le moteur d'entraînement du tambour à une vitesse lente.

Selon un mode de réalisation de la présente invention, le signal de vitesse est produit par un tachymètre équipant de façon standard le moteur.

Ces objets, caractéristiques et avantages ainsi que d'autres de la présente invention seront exposés en détail dans la description suivante de modes de réalisation particuliers faite en relation avec les figures jointes parmi lesquelles :
la figure 1, précédemment décrite, représente schématiquement un système de régulation classique de la vitesse d'un moteur ;
la figure 2, précédemment décrite, représente les allures de divers signaux dans le système de la figure 1 ; et
les figures 3A à 3C illustrent des allures de divers paramètres et de signaux obtenus en mettant en oeuvre le procédé selon l'invention dans le système de la figure 1.

Le procédé de régulation selon l'invention peut être mis en oeuvre par un microcontrôleur classique inséré dans un système classique de régulation, tel que celui de la figure 1. Ainsi, dans la suite de la description, on se réfèrera à des éléments de la figure 1.

Le microcontrôleur 16 est programmé pour commuter d'un fonctionnement selon un procédé de régulation classique vers un fonctionnement selon le procédé de l'invention lorsque, par exemple, la consigne de vitesse Nc devient inférieure à une valeur correspondant à la vitesse minimale que le système peut normalement réguler.

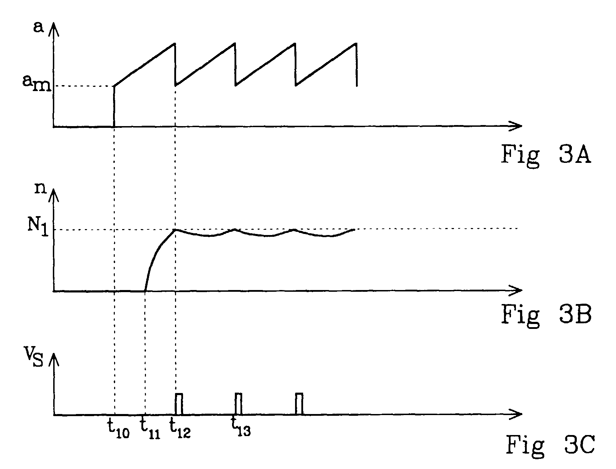

Les figures 3A à 3C illustrent respectivement les allures de l'angle de conduction a du triac 10, de la vitesse de rotation n du moteur, et du signal de vitesse Vs fourni par le comparateur 14 lorsqu'il se produit une régulation à basse vitesse selon l'invention.

A un instant t₁₀, on décide de faire tourner le moteur à basse vitesse, le moteur étant par exemple initialement à l'arrêt. L'angle de conduction est amené vers une valeur aₘ entraînant un courant dans le moteur insuffisant pour le démarrer. A partir de l'instant t₁₀, l'angle de conduction est progressivement augmenté sur plusieurs demi-périodes du secteur. A un instant t₁₁, le courant est suffisant pour faire démarrer le moteur qui tourne de plus en plus vite au fur et à mesure que l'angle de conduction augmente. En même temps que la vitesse de rotation du moteur augmente, l'amplitude du signal fourni par le tachymètre augmente également mais reste initialement inférieure à la tension de référence Vref. A un instant t₁₂, l'amplitude du signal fourni par le tachymètre 12 atteint la valeur Vref et le moteur atteint une vitesse de rotation correspondante N₁. Le signal Vs présente alors une impulsion qui est détectée par le microcontrôleur 16 qui ramène l'angle de conduction a vers sa valeur initiale aₘ insuffisante pour démarrer le moteur. A partir de l'instant t₁₂, la vitesse du moteur commence donc à décroître, mais l'angle de conduction est de nouveau progressivement augmenté sur plusieurs demi-périodes du secteur ; à un moment donné la vitesse du moteur finit par croître de nouveau. A un instant t₁₃, la vitesse de rotation du moteur atteint de nouveau la valeur N₁, il surgit une nouvelle impulsion du signal Vs et l'angle de conduction est de nouveau ramené vers sa valeur initiale...

Ainsi, la vitesse de rotation du moteur reste proche de la valeur N₁ qui est la valeur pour laquelle l'amplitude du signal fourni par le tachymètre atteint Vref. La valeur Vref correspond généralement à une vitesse de rotation N₁ bien plus faible que la vitesse minimale classique. En pratique, on pourra faire varier la valeur N₁ en faisant varier la tension de référence Vref.

On notera que le procédé selon l'invention est basé sur la mesure de l'amplitude du signal fourni par le tachymètre, alors qu'il est mis en oeuvre dans un système classiquement basé sur une mesure de période de ce signal.

Les valeurs maximales atteintes par l'angle de conduction et l'amplitude maximale de l'ondulation de la vitesse de rotation autour de la valeur N₁ dépendent de la charge du moteur. Dans un mode de réalisation simple, l'angle de conduction minimal aₘ est choisi tel que le moteur non chargé soit alimenté juste en-dessous de son intensité de démarrage. Dans un mode de réalisation plus élaboré, on pourra prévoir une adaptation de la valeur minimale aₘ, par exemple, de manière qu'à chaque impulsion du signal Vs, on abaisse l'angle de conduction d'une valeur constante ou proportionnelle le à l'angle de conduction et suffisante pour que le moteur se mette à décélérer.

La programmation du microcontrôleur 16 pour obtenir les fonctions décrites ci-dessus est à la portée de tout programmeur.

De nombreuses variantes et modifications de la présente invention apparaîtront à l'homme du métier, notamment en ce qui concerne le choix de l'angle de conduction aₘ et la vitesse d'incrémentation de l'angle de conduction, ce choix pouvant être facilement déterminé par essais.

## Revendications

1. Procédé de régulation de vitesse d'un moteur (M) comprenant les étapes suivantes lors d'une régulation à basse vitesse :
- générer un signal de vitesse dont l'amplitude varie dans le même sens que la vitesse du moteur ; et
- comparer l'amplitude dudit signal à un seuil prédéterminé (Vref) ;
caractérisé en ce qu'il comprend en alternance les étapes suivantes :
- tant que ladite amplitude est inférieure au seuil, augmenter progressivement le courant de commande du moteur à partir d'une valeur provoquant une décélération du moteur ; et
- dès que ladite amplitude dépasse le seuil, diminuer brusquement le courant de commande jusqu'à une valeur provoquant une décélération du moteur.

2. Procédé selon la revendication 1, caractérisé en ce qu'il comprend, lors d'une régulation de vitesse dans une plage de valeurs supérieures à ladite basse vitesse, les étapes suivantes :
- comparer la période du signal de vitesse à une période de consigne ;
- en fonction de l'écart entre la période de consigne et la période du signal de vitesse, modifier l'angle de conduction (a) d'un interrupteur (10) commandant le moteur à partir du secteur.

3. Procédé selon la revendication 1, caractérisé en ce que, lors de la régulation à basse vitesse, le courant de commande du moteur est progressivement augmenté en augmentant ledit angle de conduction (a) sur plusieurs demi-périodes du secteur.

4. Utilisation du procédé selon la revendication 1 pour faire tourner à vitesse lente le moteur d'entraînement d'un tambour de machine à laver.

5. Procédé selon la revendication 1, caractérisé en ce que le signal de vitesse est produit par un tachymètre (12) équipant de façon standard le moteur.

## Patentansprüche

1. Verfahren zum Regeln der Geschwindigkeit eines Motors (M), mit den folgenden Verfahrensschritten während der Regelung bei niedriger Geschwindigkeit:
Erzeugen eines Geschwindigkeitssignals, dessen Amplitude sich in derselben Richtung wie die Geschwindigkeit des Motors ändert; und
Vergleichen der Amplitude des Signals mit einem vorgegebenen Schwellwert (Vref);
dadurch gekennzeichnet, daß es abwechselnd die folgenden Schritte aufweist:
so lange die Amplitude niedriger als der vorgegebene Schwellwert ist, progessives Erhöhen des Steuerstroms des Motors ausgehend von einem Wert, der ein Abbremsen des Motors bewirkt, und
sobald die Amplitude den Schwellwert überschreitet, plötzliches Vermindern des Steuerstroms bis zu einem Wert, der ein Abbremsen des Motors bewirkt.

2. Verfahren nach Anspruch 1, dadurch gekennzeichnet, daß während der Regelung der Geschwindigkeit innerhalb eines Wertebereichs über der besagten langsamen Geschwindigkeit die folgenden Schritte ausgeführt werden:
Vergleichen der Periode des Geschwindigkeitssignals mit einer Bezugsperiode und
Modifizieren des Schaltwinkels (a) eines Schalters (10), welcher den Motor ausgehend vom Netz ansteuert, als eine Funktion der Differenz zwischen der Bezugsperiode und der Periode des Geschwindigkeitssignals.

3. Verfahren nach Anspruch 1, dadurch gekennzeichnet, daß während der Regelung bei niedriger Geschwindigkeit der Steuerstrom des Motors progressiv erhöht wird, indem der Schaltwinkel (a) über mehrere Halbwellen des Netzes erhöht wird.

4. Verwendung des Verfahrens nach Anspruch 1 zum langsamen Drehen des Antriebsmotors der Trommel einer Waschmaschine.

5. Verfahren nach Anspruch 1, dadurch gekennzeichnet, daß das Geschwindigkeitssignal von einem Tachometer (12) erzeugt wird, mit dem der Motor standardmäßig ausgestattet ist.

## Claims

1. A method for regulating the speed of a motor (M) including the following steps during regulation at low speed:
- generating a speed signal whose amplitude varies in the same direction as the speed of the motor; and
- comparing the amplitude of said signal with a predetermined threshold (Vref);
characterized in that it comprises the following alternate steps:
- as long as said amplitude is lower than the predetermined threshold, progressively increasing the control current of the motor from a value causing the motor to decelerate; and
- as soon as said amplitude exceeds the threshold, abruptly decreasing the control current to a value causing the motor to decelerate.

2. The method of claim 1, characterized in that it comprises, during a regulation of the speed within a range of values higher than said low speed, the following steps:
- comparing the period of the speed signal with a reference period; and
- modifying the switching angle (a) of a switch (10) controlling the motor from the mains as a function of the difference between the reference period and the period of the speed signal.

3. The method of claim 1, characterized in that, during regulation at low speed, the control current of the motor is progressively increased by increasing said switching angle (a) on several half-periods of the mains.

4. Utilization of the method of claim 1 to slowly rotate the driving motor of the drum of a washing machine.

5. The method of claim 1, characterized in that the speed signal is produced by a tachometer (12) conventionally provided on the motor.
